# EUROPEAN PATENT APPLICATION

(11) **EP 0 791 508 A1**
(43) Date of publication of application: **27.08.1997**
(21) Application number: 97102198.5
(22) Date of filing: 12.02.1997
(51) Int. Cl.: B60R 21/20, B29C 45/16

(54) **Instrument panel and method of forming the same**

(30) Priority: 21.02.1996 JP 33603/96
(71) Applicant: TOYOTA JIDOSHA KABUSHIKI KAISHA, Aichi-ken (JP)
(72) Inventor: Ukai, Junzo, Toyota-shi, Aichi (JP)
(74) Representative: Kügele, Bernhard

(57) **Abstract**

The present invention is an instrument panel (10) in which an air bag device (12) which allows a bag body (16) to inflate to expand in a vehicle occupant compartment is built in, comprising: an instrument panel base plate (24) in which a concave portion (42) is formed by resin molding on a surface of the instrument panel base plate, which surface facing an exterior of the vehicle, and at a position facing the air bag device (12), the concave portion having a thickness (t1) smaller than that of a region therearound; and an air bag door base plate (30) formed integrally with the concave portion (42) of the instrument panel base plate (24) and provided with an air bag door (28) which is ruptured to allow expansion of the bag body in the vehicle occupant compartment when the bag body inflates, the air bag door base plate (30) being formed of a resin material which is different than a resin material of which the instrument panel base plate is formed.

## Description

### BACKGROUND OF THE INVENTION

### Field of the Invention:

The present invention relates to an instrument panel of a vehicle, and particularly to an instrument panel in which an air bag device for a front passenger seat is provided, and a method of forming the instrument panel.

### Description of the Related Art:

As an air bag device provided in a vehicle, there is an air bag device for a front passenger seat which is used for an occupant on a front passenger seat. The air bag device for a front passenger seat (which will be hereinafter referred to as "air bag device") is provided on a back surface side of an instrument panel (the side facing an exterior of a vehicle). An air bag door is formed in the instrument panel and when the air bag device is actuated and a bag body within the air bag device inflates, the air bag door is broken by being pressed by the inflating bag body so as to expand the bag body in a vehicle occupant compartment.

As a method of providing the air bag door in the instrument panel, there exists a method in which an opening is formed at a predetermined position on the instrument panel and an air bag door module having the air bag door formed therein is mounted at the opening. This method requires an operation for mounting the air bag door module on the instrument panel. Further, this method also requires appropriate management, for example, parting between the opening formed in the instrument panel and the air bag door module to prevent deterioration of the external appearance of the instrument panel.

As other method, there is a method in which the air bag door is formed integrally with the instrument panel. In this method, since the air bag door is previously formed in the instrument panel, mounting of the air bag device on the instrument panel becomes facilitated. Examples of the air bag device in which the air bag door is previously formed in the instrument panel are disclosed in Japanese Patent Application Laid-Open (JP-A) Nos. 6-298034, 5-185893, 7-137596, and the like.

As shown in JP-A No. 6-298034 or 5-185893, when the air bag door is formed integrally with the instrument panel, it is necessary to form a groove-shaped tear line on the surface of the instrument panel so that a bag body expands easily and reliably around the air bag door or at a central portion of the air bag door to be broken when the air bag device is actuated. In the instrument panel as the above, since the tear line appears on the surface of the instrument panel, appropriate management of the shape or the like of the instrument panel becomes necessary to prevent deterioration of the external appearance of the instrument panel, which is caused by the tear line. Further, it can be clearly seen that the air bag device is mounted on the instrument panel.

On the other hand, JP-A No. 7-137596 discloses molding processing of two kinds of resin in which when the instrument panel is formed by resin molding, an opening used to form the air bag door is provided, resin for forming the air bag door is caused to flow into the opening, and the air bag door is formed integrally with the instrument panel.

By carrying out the forming processing of two kinds of resin, the air bag door can be reliably broken without the strength of the instrument panel being deteriorated. Further, it is possible to prevent the tear line from appearing on the surface of the instrument panel.

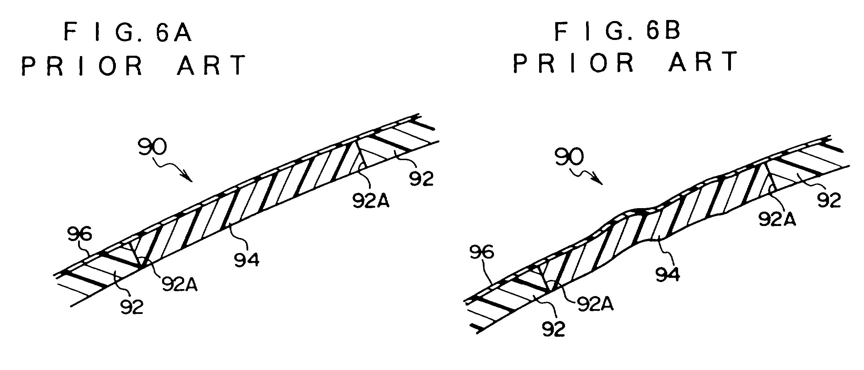

For example, as shown in Fig. 6A, an opening portion 92A is formed in an instrument panel base plate 92 which mainly forms an instrument panel 90 and an air bag door portion 94 is formed, by resin molding, within the opening portion 92A in such a manner as to be integrated with the instrument panel base plate 92. Further, when each surface of the instrument panel 92 and the air bag door portion 94 is covered by a surface layer 96 made of resin, or is subjected to coating, even if resin of which the instrument panel 92 is formed and resin of which the air bag door portion 94 is formed have different gloss and feel, the surface of the instrument panel 90 can be formed at uniform gloss and feel and the instrument panel 90 having an excellent external appearance can be obtained accordingly.

However, when the resin molding is carried out, if resin of which the instrument panel is formed and the resin of which the air bag door is formed have different materials, these resins have different contraction ratios at the time of forming and different heat expansion coefficients (namely, CLTE). For this reason, as shown in Fig. 6B, when the forming processing of two kinds of resin is effected by using the above-described method, wave-shaped distortion is generated in the air bag door 94 which is formed in the opening portion 92A of the instrument panel base plate 92. Since it is extremely difficult to control the range over which the resin flows when the air bag door portion 94 is formed within the opening portion 92A of the instrument panel base plate 92 by the forming processing of two kinds of resin, a region in which deformation such as distortion occurs in the air bag door portion 94 cannot be specified and it becomes difficult to take a measure not to damage the appearance of the instrument panel.

The deformed portion generated at the time of resin molding appears on the surface of the instrument panel 90 and the external appearance of the instrument panel 90 thereby deteriorates. When the distorted portion is small, it is considered that this portion is concealed by the surface layer 96. However, in this case, the thickness of the surface layer 96 becomes large and there is a possibility that the air bag door may not be broken at a proper position.

### SUMMARY OF THE INVENTION

In view of the above-described circumstances, it is an object of the present invention to provide an instrument panel with which an air bag door is integrally formed without the external appearance thereof being deteriorated, and a method of forming the instrument panel.

A first aspect of the present invention is an instrument panel in which an air bag device which allows a bag body to inflate to expand in a vehicle occupant compartment is built in, comprising: an instrument panel base plate in which a concave portion is formed by resin molding on a surface of the instrument panel base plate, which surface facing an exterior of the vehicle, and at a position facing the air bag device, the concave portion having a thickness smaller than that of a region therearound; and an air bag door base plate formed integrally with the concave portion of the instrument panel base plate and provided with an air bag door which is ruptured to allow expansion of the bag body in the vehicle occupant compartment when the bag body inflates, the air bag door base plate being formed of a resin material which is different than a resin material of which the instrument panel base plate is formed.

In accordance with the first aspect of the present invention, a thin-walled concave portion is formed in the instrument panel base plate without an opening being formed therein and the instrument panel has a two-layer resin structure in which the air bag door base plate is formed in the concave portion. Since the air bag door base plate is formed in the concave portion of the instrument panel base plate, even when resin of which the instrument panel base plate is formed and resin of which the air bag door base plate is formed have different heat expansion ratios and different contraction ratios at the time of forming processing, there is no possibility that the finished quality of the instrument panel be damaged due to distortion occurring on the surface of the instrument panel base plate which faces the vehicle occupant compartment.

Meanwhile, it suffices that the tear line which causes the air bag door to be reliably broken may be formed in the air bag door base plate. As a result, there is no possibility that the tear line appears on the surface of the instrument panel.

A second aspect of the present invention is constructed in that, in the first aspect of the present invention, the instrument panel base plate is formed by hard resin and the air bag door base plate is formed by resin whose low-temperature impact absorptivity and low-temperature extension ratio are both high.

In accordance with the second aspect of the present invention, since resin whose low-temperature impact absorptivity is high is used for the air bag door base plate, a desired position on the air bag door base plate can be broken with shearing force being concentrated thereon. Since a region of the instrument panel base plate which faces the air bag door base plate is formed to have a small thickness, even when hard resin is used for the instrument panel base plate, the instrument panel base plate is broken integrally with the air bag door of the air bag door base plate. As a result, the bag body of the air bag device can reliably expand toward the vehicle occupant compartment.

A third aspect of the present invention is constructed in that, in the second aspect of the present invention, the air bag door base plate is an air bag door module in which a mounting portion in which the air bag device is mounted is formed integrally with the air bag door base plate.

In accordance with the third aspect of the present invention, since the air bag door module is formed integrally with the instrument panel base plate, an operation for mounting the air bag device on the instrument panel becomes extremely facilitated. Further, since the mounting portion is formed of resin whose low-temperature impact absorptivity and low-temperature extension ratio are both high in the same way as in the air bag door base plate, the mounting portion is not broken when the bag body inflates and allows the bag body to reliably expand toward the vehicle occupant compartment.

A fourth aspect of the present invention is a method of forming an instrument panel in which an air bag device which allows a bag body to inflate to expand in a vehicle occupant compartment is built in, comprising the steps of: providing, at a position facing the air bag device on a surface of an instrument panel base plate which faces an exterior of the vehicle, a metallic mold including a slide core which coincides with the shape of a concave portion having a thickness smaller than that of a region around the concave portion; molding the instrument panel base plate from resin by using the metallic mold; moving the slide core after the resin molding, and forming a space corresponding to the shape of the air bag door base plate in which an air bag door to be broken so as to allow expansion of the bag body in the vehicle occupant compartment is provided, in accordance with the shape of the concave portion of the instrument panel base plate within the metallic mold; and effecting injection molding to form the air bag door base plate within the space.

In accordance with the fourth aspect of the present invention, the shape of the metallic mold for resin molding is altered in a stepwise manner by moving the slide core. As a result, when the instrument panel base plate and the air bag door base plate are formed as a two-layer structure, it is not necessary to provide molds corresponding to their shapes in a stepwise manner. Further, since the shape of the mold can be changed by merely moving the slide core, an operation for forming the instrument panel base plate and the air bag door base plate as the two-layer structure is extremely facilitated, thereby resulting in simplification of the forming operation of the instrument panel and reduction in cost for forming.

A fifth aspect of the present invention is a method of forming an instrument panel in which an air bag device which allows a bag body to inflate to expand in a vehicle occupant compartment is built in, comprising the steps of: providing, at a position facing the air bag device on a surface of an instrument panel base plate which faces an exterior of the vehicle, a metallic mold including a first core block which coincides with the shape of a concave portion having a thickness smaller than that of a region around the concave portion; molding the instrument panel base plate from resin by using the metallic mold; providing a second core block for forming, in the concave portion of the instrument panel base plate, an air bag door base plate including an air bag door which is broken to allow expansion of the bag body in the vehicle occupant compartment; exchanging the first core block for the second core block and forming a space corresponding to the shape of the air bag door base plate in accordance with the shape of the concave portion of the instrument panel base plate within the metallic mold; and effecting injection molding to form the air bag door base plate within the space.

In accordance with the fifth aspect of the present invention, the shape of the metallic mold for resin molding is altered in a stepwise manner by exchanging the first core block for the second core block. As a result, when the instrument panel base plate and the air bag door base plate are formed as the two-layer structure, it is not necessary to provide molds corresponding to their shapes in a stepwise manner. Further, since the shape of the mold can be changed by merely exchanging the first core block for the second core block, an operation for forming the instrument panel base plate and the air bag door base plate as the two-layer structure becomes extremely facilitated, thereby resulting in simplification of the forming operation of the instrument panel and reduction in cost for forming.

As described above, the instrument panel of the present invention has the two-layer structure in which the air bag door base plate is covered by the instrument panel base plate. For this reason, there is no possibility that unsatisfactory formed state is obtained, for example, distortion or the like occurs on the surface of the instrument panel due to the differences in the forming contraction ratio and the heat expansion ratio of respective resin and that the tear line or the like for mounting the air bag device appears as a concave and convex portion. This results in improvement in the external appearance of the instrument panel. Further, in the present invention, even when the instrument panel base plate is formed of hard resin, the bag body can reliably expand in the vehicle occupant compartment and the mounting operation of the air bag device becomes extremely facilitated.

Moreover, the present invention is constructed in that when the shape of the metallic mold is altered in a stepwise manner at the time of forming, the slide core or the core blocks are used. For this reason, forming processing of two kinds of resin can be carried out in a simple manner. Accordingly, it is possible to manufacture, at a low cost, the instrument panel having an improved external appearance.

### BRIEF DESCRIPTION OF THE DRAWINGS

Fig. 1 is a schematic perspective view showing an external appearance of an instrument panel of a vehicle.

Fig. 2 is a schematic enlarged cross sectional view of the instrument panel taken along the lines 2-2 in Fig. 1.

Fig. 3A is a schematic cross sectional view of a metallic mold for molding an instrument panel, which illustrates the flow of a molding operation of the instrument panel.

Fig. 3B is a schematic cross sectional view of the instrument panel and the mold at the time of forming an instrument panel base plate, which illustrates the flow of the molding operation of the instrument panel.

Fig. 3C is a schematic cross sectional view of the instrument panel and the mold in a state in which a slide core is removed prior to forming of an air bag door module, which illustrates the flow of the molding operation of the instrument panel.

Fig. 3D is a schematic cross sectional view of the instrument panel and the mold at the time of forming the air bag door module, which illustrates the flow of the molding operation of the instrument panel.

Fig. 4A is a schematic cross sectional view of an instrument panel and a metallic mold at the time of forming an instrument panel base plate, which illustrates a portion of a molding operation of the instrument panel in which the metallic mold different from that of Figs. 3A through 3D is used.

Fig. 4B is a schematic cross sectional view of an instrument panel and a metallic mold at the time of forming an air bag door module, which illustrates a portion of the molding operation of the instrument panel in which the metallic mold different from that of Figs. 3A through 3D is used.

Fig. 5A is a schematic cross sectional view showing another embodiment of the instrument panel applied to the present invention.

Fig. 5B is a schematic cross sectional view showing another embodiment of the instrument panel applied to the present invention.

Fig. 6A is a schematic cross sectional view showing a conventional instrument panel obtained by forming processing of two kinds of resin.

Fig. 6B is a schematic cross sectional view showing a conventional instrument panel in which distortion is generated due to the forming processing of two kinds of resin.

### DESCRIPTION OF THE PREFERRED EMBODIMENTS

Referring now to the attached drawings, an embodiment of the present invention will be hereinafter described.

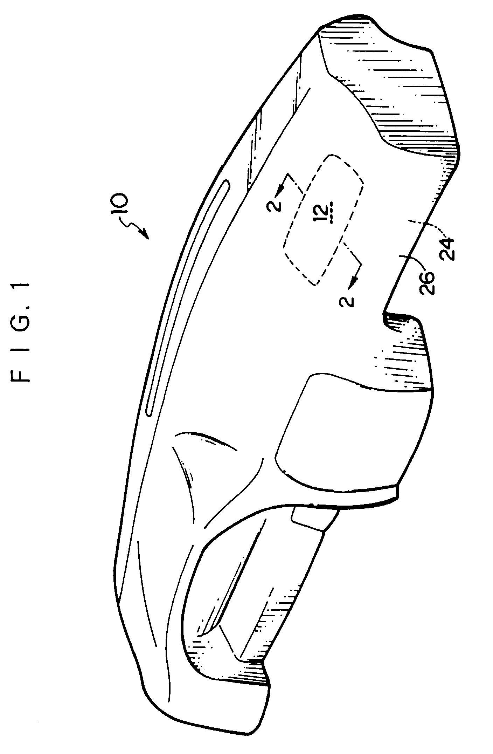

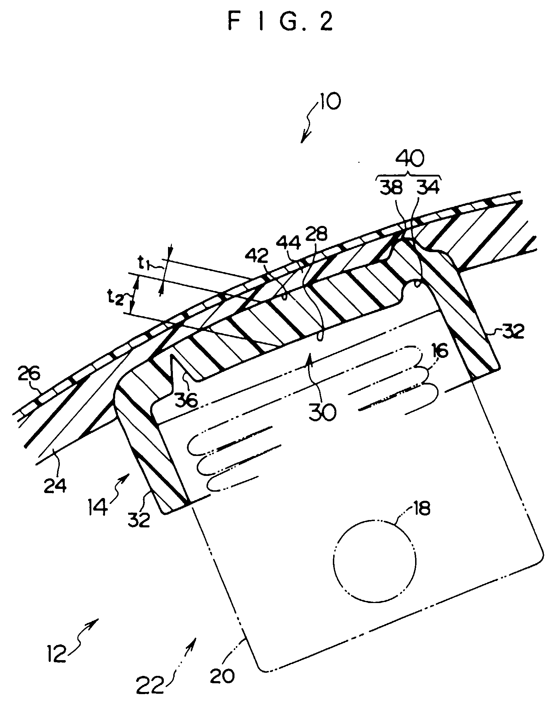

Fig. 1 is a perspective view of an instrument panel 10 provided in a vehicle occupant compartment. The instrument panel 10 is provided with an air bag device 12 (which is partly shown in Fig. 2) which is disposed at a vehicle-interior surface of the instrument panel 10 on the side of a front passenger seat (i.e., the right side of the panel on the paper of Fig. 1).

As shown in Fig. 2, the air bag device 12 is formed by a door module 14 provided in the instrument panel 10, and an air bag module 22 in which a bag body 16 and an inflator 18 are accommodated within a module case 20.

Further, as shown in Figs. 1 and 2, the surface of the instrument panel 10, which is disposed further at a vehicle-interior side than an instrument panel base plate 24 forming a basic shape of the instrument panel 10, is covered by a surface layer 26. The air bag device 12 is disposed at a predetermined position on a surface of the instrument panel base plate 24 which is opposite to the surface layer 26 (the surface will be hereinafter referred to as a back surface of the instrument panel base plate 24).

In the air bag device 12, when a state of sudden deceleration of a vehicle is detected by an unillustrated mechanical or electrical acceleration sensor or the like, the inflator 18 within the air bag module 22 is actuated and the bag body 16 accommodated in the module case 20 in a folded state is inflated toward the door module 14. The bag body 16 presses against a predetermined region of the door module 14 to break the instrument panel 10, and thereby expands in a vehicle occupant compartment. As described above, a publicly-known conventional structure can be applied to the air bag device 12, and in the present embodiment, a detailed description of the air bag device 12 will be omitted.

As shown in Fig. 2, the door module 14 is constructed in that an air bag door base plate 30 in which an air bag door 28 is formed at a central portion thereof and a wall portion 32 (i.e., a mounting portion) provided upright from a peripheral edge portion of the air bag door base plate 30 are formed integrally with each other. As a result, the door module 14 forms a housing in which the module case 20 is accommodated. Meanwhile, the air bag module 22 is mounted on the instrument panel 10 in such a manner that the module case 20 is fixed to the wall portion 32 by bolt tightening. Further, since the door module 14 is constructed in that the module case 20 is surrounded by the wall portion 32, expansion of the inflating bag body 16 along the back surface of the instrument panel base plate 24 is prevented.

The air bag door 28 is formed in such a manner as to be surrounded by a round bottom groove 34 and a tear line 36 which are provided in the air bag door base plate 30. The round bottom groove 34 having a semi-circular cross sectional configuration is formed along one side of the wall portion 32. Further, the tear line 36 having a substantially triangular cross sectional configuration is formed in the shape of a notch deeply cut in the air bag door base plate 30 and is formed along a side of the wall portion 32 where the round bottom groove 34 is not formed thereon. Although not shown in the drawing, both ends of the tear line 36 are respectively connected to both ends of the round bottom groove 34.

A portion of the air bag door base plate 30 where the tear line 36 is formed is weakened, and when the air bag door 28 is pressed by the inflating bag body 16, the air bag door 28 is broken along the tear line 36. Further, the air bag door base plate 30 includes a projecting portion 38 having a semi-circular cross sectional configuration, which projects toward the instrument panel base plate 24 so as to face the round bottom groove 34. A hinge portion 40 formed by the projecting portion 38 and the round bottom groove 34 is provided in the air bag door base plate 30 and the air bag door 28 broken along the tear line 36 swings around the hinge portion 40 so that an opening which allows expansion of the bag body 16 toward the vehicle occupant compartment is formed.

On the other hand, a concave portion 42 is formed in the instrument panel base plate 24 of the instrument panel 10 in such a manner as to face the door module 14. As a result, a thin-walled portion 44 whose thickness is smaller than that of a portion of the instrument panel base plate 24 disposed around the concave portion 42 is formed in a region of the instrument panel base plate 24 which faces the air bag door 28. A vehicle-interior side of the air bag door base plate 30 is covered integrally by the thin-walled portion 44. Further, the instrument panel base plate 24 is constructed in such a manner that the thin-walled portion 44 is broken, together with the air bag door 28, along the tear line 36.

In the instrument panel 10 thus formed, the instrument panel base plate 24 and the door module 14 can be formed integrally with each other by the forming processing of two kinds of resin. As the resin for forming the instrument panel base plate 24 of the instrument panel 10, a hard resin material conventionally used for the instrument panel, for example, ABS resin in which PP (i.e., polypropylene), PPG (i.e., polypropylene glycol), or PC (i.e., polycarbonate), containing rubber or talc, is blended, or denatured PPO (i.e., denatured polyphenylene oxide) can be used.

As a material of the door module 14 formed integrally with the hard resin material for forming the instrument panel base plate 24, a resin whose low-temperature impact absorptivity and low-temperature extension ratio is high (excellent), for example, TPO (i.e., olefinic thermoplastic elastomer; for example, Thermoran (trade name) manufactured by Mitsubishi Chemical Kabushikikaisha), TPE (i.e., thermoplastic elastomer; for example, Santoprene (trade name) manufactured by Advanced Elastomer System), and TPS polyester elastomer (for example, DYM (trade name) manufactured by DuPont) is preferably used.

In other words, as the instrument panel base plate 24, a resin of which elastic modulus at an ordinary temperature is 8,000 to 18,000 kgf/cm², extension ratio at an ordinary temperature is 250 to 600%, and brittle temperature is 0°C to ―25°C is preferably used. Further, as the air bag door base plate 30 which forms the air bag door 28, a resin of which elastic modulus at an ordinary-temperature is 2,000 to 8,000 kgf/cm², extension ratio at an ordinary temperature is 200 to 800%, extension ratio at a low temperature (―35°C) is 50 to 400%, and brittle temperature is ―30°C or less.

Since the resin of which low-temperature impact absorptivity and low-temperature extension ratio are both high is used for the air bag door base plate 24, when the bag body 16 of the air bag device 12 inflates and the air bag door base plate 30 is pressed by the bag body 16, shearing force can be concentrated on the tear line 36 so that the air bag door 28 can be reliably broken along the tear line 36.

Meanwhile, as the surface layer 26, for example, PVC (i.e., polyvinyl chloride) can be used. By covering the surface of the instrument panel base plate 24 facing the vehicle occupant compartment by the surface layer 26, the surface of the instrument panel 10 (which faces the vehicle occupant compartment) can be finished at desired gloss and feel irrespective of a material of the resin used for the instrument panel base plate 24.

In the present embodiment, thickness t₂ of the air bag base plate 30 which is formed by using the resin having high low-temperature impact absorptivity and low-temperature extension ratio is, for example, set to be 2 to 4.5 mm. Further, thickness t₁ of the thin-walled portion 44 of the instrument panel 24 formed of a hard resin, with the surface layer 26 added thereto, is set to be 1.5 mm or less. Since the thickness of the thin-walled portion 44 of the instrument panel base plate 24 is made smaller as described above, the thin-walled portion 44 is provided to be reliably broken integrally with the air bag door base plate 30. Meanwhile, these thickness dimensions may be determined in accordance with the kind of resin to be used, the shape of the door module 14, expansion force of the bag body 16 of the air bag device 12, or the like, and are not limited to the above-described values.

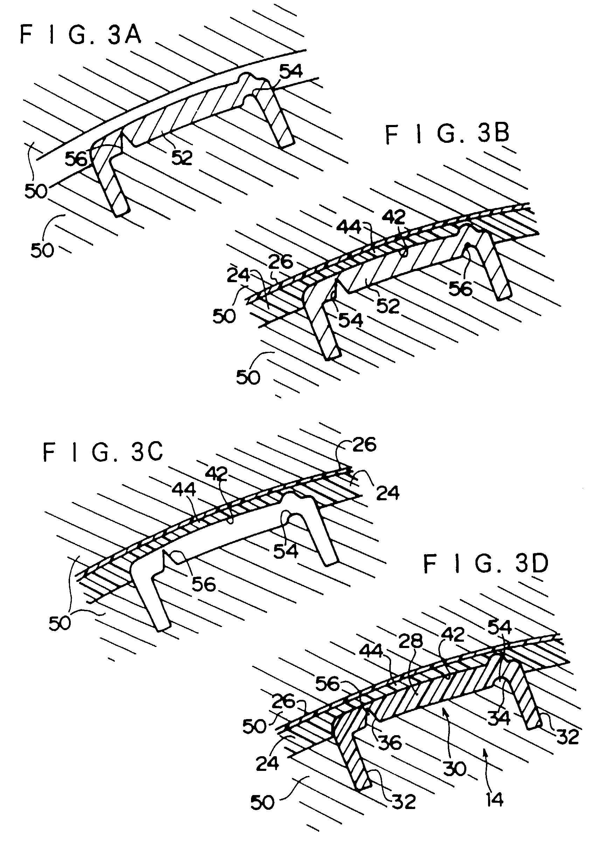

As shown in Figs. 3A and 3B, a metallic mold 50 used for forming the instrument panel 10 includes a slide core 52. It suffices that the slide core 52 may be formed in the shape which coincides with that of the door module 14, or may be formed in the shape which at least prevents flowing of resin into a portion of the mold in which the door module 14 is formed when the instrument panel base plate 24 is formed.

As shown in Fig. 3C, when the slide core 52 is removed from the position shown in Figs. 3A and 3B or is moved to a predetermined position after injection molding of the instrument panel base plate 24, a space whose shape coincides with that of the door module 14 is formed in the mold 50. When resin for forming the door module 14 is flowed into the space of the mold 50 formed after the slide core 52 has been moved, the instrument panel 10 in which the door module 14 is formed integrally with the instrument panel base plate 24 by injection molding is formed (see Fig. 3D). Meanwhile, in each of Figs. 3A through 3D, illustration of a gate used for injection of resin into the mold 50 is omitted.

Projecting portions 54, 56 respectively formed to correspond to the round bottom groove 34 and the tear line 36 are provided in the interior of the mold 50 after the slide core has been moved. For this reason, when the door module 14 is formed by the mold 50 after the slide core has been retracted, the round bottom groove 34 and the tear line 36 are formed integrally with each other in the air bag door base plate 30. Meanwhile, after the air bag door base plate 30 has been formed, the tear line 36 may be formed in such a manner that an edge of the air bag door base plate 30 is cut into a notch by a heated blade or the like. As a result, there is no possibility that the shape of the mold 50 for forming the instrument panel 10 becomes complicated.

Next, an operation of the present embodiment, namely, a forming operation of the instrument panel 10 will be described with reference to Figs. 3A through 3D.

The resin forming of the instrument panel 10 is effected in such a manner that injection molding of the instrument panel base plate 24 is effected prior to injection molding of the door module 14.

As shown in Fig. 3A, the mold 50 for forming the instrument panel 10 is provided with the slide core 52. With the slide core 52 projecting at a predetermined position in the mold 50, the space corresponding to the shape of the instrument panel base plate 24 is formed within the mold 50. The slide core 52 is at least formed so as to allow the concave portion 42 to be formed at a predetermined position in the instrument panel base plate 24.

As shown in Fig. 3B, by effecting injection molding in which resin for forming the instrument panel base plate 24 is flowed into the mold 50 in which the slide core 52 is in a projecting state, the instrument panel base plate 24 is formed. Meanwhile, when the instrument panel base plate 24 is formed, the surface layer 26 is formed on the surface of the instrument panel base plate 24 in an integral manner.

Subsequently, as shown in Fig. 3C, the slide core 52 within the mold 50 is moved at a predetermined suitable time and the space which coincides with the shape of the door module 14 is formed by the mold 50 and the concave portion 42 of the instrument panel base plate 24. As shown in Fig. 3D, by effecting the injection molding in which resin for forming the door module 14 is flowed into the space in the mold 50 which is formed by the mold 50 and the instrument panel base plate 24, the instrument panel 10 in which the instrument panel base plate 24 and the door module 14 are formed integrally with each other is formed within the mold 50.

Generally, a slide core is used to facilitate die-cutting of an undercut portion of a formed product. However, in the present embodiment, since the slide core 52 is provided in the mold 50 and is moved so that a mold shape within the mold 50 is altered, alteration of the mold shape becomes extremely easy and a stepwise forming operation can be carried out efficiently. In other words, it is not necessary to use a plurality of molds whose shapes are different from each other little by little in accordance with respective forming stages, thereby resulting in reduction in cost for forming the instrument panel 10.

Further, when the door module 14 is formed, a flowing range of resin for forming the door module 14 is limited by the instrument panel 24 within the mold 50 so that forming of the door module 14 having a desired shape is allowed. Further, since the surface of the door module 14 (specifically, the air bag door base plate 30), which faces the instrument panel base plate 24, is integrally covered by the instrument panel base plate 24, even when resin for forming the door module 14 and resin for forming the instrument panel base plate 24 have different contraction ratios at the time of forming and different heat expansion ratios, there is no possibility that the external appearance of the instrument panel 10 be damaged due to distortion or the like being formed on the surface of the instrument panel base plate 24.

Further, in the instrument panel 10, when the air bag device 12 is actuated, the tear line 36 which allows the air bag door base plate 30 to be easily broken is provided in the air bag door base plate 30, not in the instrument panel base plate 24. For this reason, the surface of the instrument panel 10 can be made smooth or may be subjected to desired decorations irrespective of the air bag device 12, and the instrument panel 10 whose external appearance is excellent can be formed.

With the instrument panel 10 in which the instrument panel base plate 24 and the door module 14 are formed integrally with each other, in a case in which the air bag module 22 is mounted to the instrument panel 10, it suffices that the module case 20 is mounted to the wall portion 32 of the door module 14. For this reason, the air bag device 12 is mounted to the instrument panel 10 in an extremely simple manner.

Further, when the air bag device 12 is actuated and the bag body 16 inflates, the wall portion 32 of the door module 14 limits a direction to which the bag body 16 inflates and the bag body 16 is thereby provided to reliably press against the air bag door 28 at a central portion of the air bag door base plate 30. Further, since a resin of which low-temperature impact absorptivity and low-temperature extension ratio are both high is used for the door module 14 (specifically, air bag door base plate 30), even when the air bag door 28 is partly pressed by the inflating bag body 16, the pressing force can be concentrated, as the shearing force, on the tear line 36 so that the air bag door 28 can be reliably broken along the tear line 36.

In the present embodiment, although a hard resin is used for the instrument panel base plate 24, a region of the instrument panel 24 which faces the air bag door 28 is formed as the weakened thin-walled portion 44. For this reason, the instrument panel base plate 24 is reliably broken together with the air bag door 28 so that the bag body 16 can expand certainly toward the vehicle occupant compartment.

Meanwhile, the present embodiment shows an example of the instrument panel and the method of forming the same according to the present invention, and the present invention is not limited thereto. Various hard resins can be used as the resin for forming the instrument panel base plate 24 of the present invention. Further, a resin having low-temperature impact absorptivity is preferably used as the resin for forming the door module 14. However, the present invention is not limited to such a resin, and various resins preferably used for forming the instrument panel can also be used.

Further, in the present embodiment, when the instrument panel 10 is formed, the slide core 52 is provided in the mold 50 and forming processing of two kinds of resin is effected in which the mold shape is altered in a stepwise manner. However, so long as the instrument panel of the present invention has a two-layer structure of the instrument panel base plate 24 and the air bag door base plate 30 at a position which faces the air bag device 12, it is not limited to the above-described forming method.

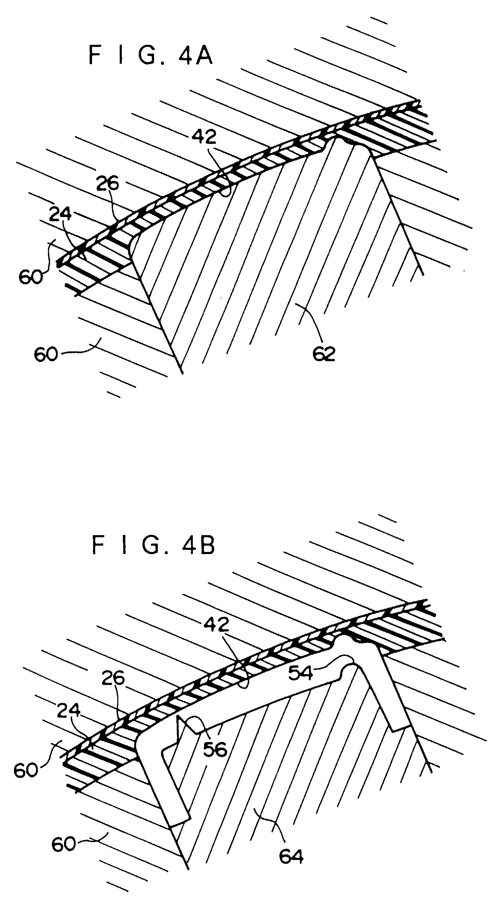

For example, as shown in Figs. 4A and 4B, a core block 62 (which serves as a first block) is disposed in a mold 60 for forming the instrument panel base plate 24 and the concave portion 42 is formed at a predetermined position on the instrument panel 24 (see Fig. 4A). Subsequently, the core block 62 is changed for a core block 64 (which serves as a second block) for forming the door module 14 in the concave portion 42 of the instrument panel base plate 24 and a space which coincides with the shape of the door module 14 is formed by the mold 60 and the core block 64. Thereafter, the injection molding of the door module 14 is effected (see Fig. 4B). So long as the instrument panel 10 having the two-layer structure of the instrument panel base plate 24 and the air bag door base plate 30 and having the same shape as that of the instrument panel in which the mold 50 and the slide core 52 are used can be formed, a publicly-known forming method can be used in this case in Figs. 4A and 4B as well.

Further, in the present embodiment, although the surface of the instrument panel base plate 24 is covered by the surface layer 26, the instrument panel of the present invention may be provided with no surface layer 26 or the like formed therein.

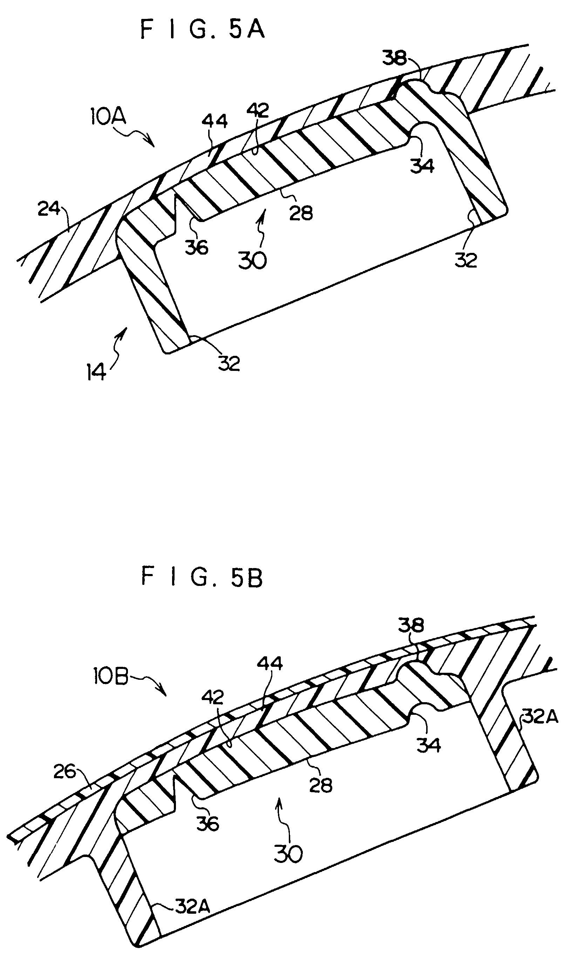

Fig. 5A shows an instrument panel 10A having no surface layer 26 on the side of the surface of the instrument panel base plate 24. Even in the instrument panel 10A, since the door module 14 is not exposed to an outside on the side of the surface of the instrument panel base plate 24, uniform gloss and feel in accordance with the material of the instrument panel base plate 24 can be obtained. In other words, since the resin for forming the instrument panel base plate 24 is selected, it is not necessary to provide the surface layer 26 on the surface of the instrument panel base plate 24 or provide coating and the instrument panel 10A having desired gloss and feel can be simply manufactured.

Further, the present embodiment is constructed in that the door module 14 with the wall portion 32 being provided integrally with the air bag door base plate 30 is formed integrally with the instrument panel base plate 24. However, the present invention is not limited to the same and it suffices that the air bag door base plate 30 in which at least the air bag door 28 is provided is formed integrally with the instrument panel base plate 24 by forming processing of two kinds of resin.

For example, in an instrument panel 10B shown in Fig. 5B, only the air bag door base plate 30 is formed in such a manner as to be integral with the concave portion 42 of the instrument panel base plate 24. In the instrument panel 10B thus formed, even when the resin for forming the instrument panel base plate 24 and the resin for forming the air bag door base plate 30 have different contraction ratios at the time of forming and different heat expansion ratios, there is no possibility that the finished state of the surface of the instrument panel be damaged.

In this case, a wall portion 32A to which the air bag module 22 is mounted may be formed in the instrument panel base plate 24. As a result, mounting of the air bag device 12 on the instrument panel 10B can be facilitated.

## Claims

1. An instrument panel in which an air bag device which allows a bag body to inflate to expand in a vehicle occupant compartment is built in, comprising:
an instrument panel base plate in which a concave portion is formed by resin molding on a surface of the instrument panel base plate, which surface facing an exterior of the vehicle, and at a position facing the air bag device, the concave portion having a thickness smaller than that of a region therearound; and
an air bag door base plate formed integrally with the concave portion of said instrument panel base plate and provided with an air bag door which is ruptured to allow expansion of the bag body in the vehicle occupant compartment when the bag body inflates, said air bag door base plate being formed of a resin material which is different than a resin material of which said instrument panel base plate is formed.

2. An instrument panel according to claim 1, wherein said instrument panel base plate is formed by hard resin.

3. An instrument panel according to claim 2, wherein said air bag door base plate is formed by resin whose low-temperature impact absorptivity and low-temperature extension ratio are both high.

4. An instrument panel according to claim 3, wherein said air bag door base plate is an air bag door module in which a mounting portion in which the air bag device is mounted is formed integrally with said air bag door base plate.

5. An instrument panel according to claim 2, wherein said instrument panel base plate is provided in that a mounting portion in which the air bag device is mounted is formed integrally with said instrument panel base plate.

6. An instrument panel according to claim 1, wherein said air bag door base plate includes a tear line on a surface thereof facing the bag body, and when pressed by the inflating bag body, said air bag door base plate is broken along the tear line.

7. An instrument panel according to claim 6, wherein said air bag door base plate includes a hinge portion, and when said air bag door base plate is broken along the tear line, an air bag door which forms said air bag door base plate is rotated around the hinge portion.

8. An instrument panel according to claim 1, further comprising:
a surface layer formed by resin molding so as to be integrated with a surface of said instrument panel which faces the vehicle occupant compartment.

9. A method of forming an instrument panel in which an air bag device which allows a bag body to inflate to expand in a vehicle occupant compartment is built in, comprising the steps of:
providing, at a position facing the air bag device on a surface of an instrument panel base plate which faces an exterior of the vehicle, a metallic mold including a slide core which coincides with the shape of a concave portion having a thickness smaller than that of a region around the concave portion;
molding the instrument panel base plate from resin by using the metallic mold;
moving the slide core after said resin molding, and forming a space corresponding to the shape of the air bag door base plate in which an air bag door to be broken so as to allow expansion of the bag body in the vehicle occupant compartment is provided, in accordance with the shape of the concave portion of the instrument panel base plate within the metallic mold; and
effecting injection molding to form the air bag door base plate within the space.

10. A method of forming an instrument panel in which an air bag device which allows a bag body to inflate to expand in a vehicle occupant compartment is built in, comprising the steps of:
providing, at a position facing the air bag device on a surface of an instrument panel base plate which faces an exterior of the vehicle, a metallic mold including a first core block which coincides with the shape of a concave portion having a thickness smaller than that of a region around the concave portion;
molding the instrument panel base plate from resin by using the metallic mold;
providing a second core block for forming, in the concave portion of the instrument panel base plate, an air bag door base plate including an air bag door which is broken to allow expansion of the bag body in the vehicle occupant compartment;
exchanging the first core block for the second core block and forming a space corresponding to the shape of the air bag door base plate in accordance with the shape of the concave portion of the instrument panel base plate within the metallic mold; and
effecting injection molding to form the air bag door base plate within the space.
